(19) Europäisches Patentamt
European Patent Office
Office européen des brevets

(11) **EP 4 647 599 A1**

(12) **EUROPEAN PATENT APPLICATION**

(43) Date of publication:
**12.11.2025 Bulletin 2025/46**

(21) Application number: **24183539.6**

(22) Date of filing: **20.06.2024**

(51) International Patent Classification (IPC):
***F03G 7/00*** *(2006.01)*

(52) Cooperative Patent Classification (CPC):
**F03G 7/015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.05.2024 CN 202410556525**

(71) Applicant: **Xi'an Xishizun Electromechanical Technology Co., Ltd**
**Xi'an City, Shaanxi 710077 (CN)**

(72) Inventors:
• **Huang, Demin**
  **Xi'an City, 710077 (CN)**
• **Huang, Qi**
  **Xi'an City, 710077 (CN)**
• **Wu, Bin**
  **Xi'an City, 710077 (CN)**
• **Li, Weigang**
  **Xi'an City, 710077 (CN)**
• **Wu, Zhuangfei**
  **Xi'an City, 710077 (CN)**
• **Ren, Zhuochao**
  **Xi'an City, 710077 (CN)**

(74) Representative: **ZHAOffice SPRL**
**Rue de Bedauwe 13**
**5030 Gembloux (BE)**

(54) **NANO CHECK VALVE OSMOSIS AND ENERGY COLLECTION METHOD AND DEVICE**

(57) A nano check valve osmosis and energy collection method and device are provided, which includes principles and methods of osmosis and energy collection technology proposed based on principles of nano check valves (2) and osmotic effects. By providing two semipermeable membranes (2-1) and filling a solution (2-2), cooperating with a concentration control module, solution concentrations at interfaces of the semipermeable membranes are regulated. This ensures that concentrations near the two semipermeable membranes are different, allowing for regulation of osmotic pressure and creation of a check valve effect. It automatically rectifies disordered, highspeed thermal motion of solvent molecules into an orderly unidirectional flow, forming potential energy of the liquid level or kinetic energy of liquid flow for energy storage or power generation. The device can extract molecular thermal kinetic energy from the environment to generate electricity, without consuming energy resources or increasing the Earth's temperature rise.

FIG. 3

EP 4 647 599 A1

**Description**

TECHNICAL FIELD

The disclosure relates to the technical field of environmental energy collection, and particularly to a nano check valve osmosis and energy collection method and device.

BACKGROUND

Energy is the cornerstone of human survival and development. With the continuous growth of global population and the continuous consumption of fossil energy, the human energy crisis becomes increasingly prominent. All countries are striving to seek new sources of energy. Fossil energy and nuclear energy are both converted into thermal energy for application, which can exacerbate global warming. Temperature is the manifestation of thermal energy that can be felt at all times and is a measure of the average kinetic energy of molecular motion. There are various kinds of liquids in the world, and the thermal motion of the molecules contains immense energy. If such energy can be utilized, it is expected to develop a new source of energy - molecular energy, achieving environmental energy collection and power generation.

Osmosis refers to the migration phenomenon that occurs when substances pass through a semipermeable membrane. The semipermeable membrane is a film with pores, the size of which is typically larger than that of small molecules but smaller than that of large molecules and ions. The small molecules can freely enter and leave the semipermeable membrane through diffusion, while the large molecules and ions cannot pass through the semipermeable membrane freely. Cell membranes, parchment paper, and reverse osmosis water purification membranes are all examples of the semipermeable membranes. When two liquids separated by a semipermeable membrane are under the same pressure, and the pure solvent passes through the semipermeable membrane into the solution, this phenomenon is called the osmosis. The osmotic not only occurs between the pure solvent and the solution but also between same solutions with different concentrations. The solvent from the low-concentration solution passes through the semipermeable membrane into the high-concentration solution. The concept of osmosis is also commonly used in fields such as wastewater purification and seawater desalination.

The indicator that characterizes the strength of the osmotic effect is osmotic pressure. For semipermeable membranes with different solution concentrations on two side, the minimum additional pressure that must be applied to the side with a higher concentration to prevent the solvent from diffusing from a lower concentration side to the higher concentration side is called the osmotic pressure which can just prevent the osmosis. Theoretically, the osmotic pressure is directly proportional to the solution concentration and thermodynamic temperature, which is expressed as follow:

$$\pi = cRT \qquad\qquad (1).$$

The equation (1) mentioned above is known as the van's Hoff equation, also referred to as the osmotic pressure equation. In this equation: c represents a molar concentration of particles in a solution, moles per liter (mol/L); R represents an ideal gas constant, which has a value of 8.314 joules per Kelvin mole, (J/(K mol)), when a unit of the osmotic pressure $\pi$ is kilopascal (kPa). T represents a thermodynamic temperature with a unit of Kelvin (K). When left and right sides of the semipermeable membrane are solutions, c refers to a molar concentration difference of particles of the solutions in the left and right sides of the semipermeable membrane.

The osmotic ability of physiological saline with a concentration of 0.9% at 37°C and a molar concentration of about 0.31mol/L is strong, with an osmotic pressure of about 0.79 megapascals (MPa) and a water level difference of about 79 meters (m). Generally, the salinity of seawater is about 3%, and the relative osmotic pressure of fresh water is about 240 m, which can be used for power generation. There is now a power generation technology that utilizes the osmotic energy of river sea salt difference, which is considered green and environmentally friendly. Norway took the lead in developing the world's first river sea salt difference osmotic energy generator.

The osmosis can spontaneously cause water to flow from a part with lower concentration to a part with higher concentration of a solution, but as water molecules osmose, the solution becomes diluted, the concentration gradually decreases, and the osmotic effect weakens. If the water flow is used to perform work in a cyclic process, the concentrations of the solutions on both sides of the semipermeable membrane will gradually balance out until the osmotic effect is lost. Therefore, it is difficult to achieve cyclic work with the common osmotic effect, such as the existing osmotic energy power generation, which is a unidirectional water flow power generation. The osmotic energy power generation that relies on the salinity difference between river and sea water maintains the solution concentration essentially unchanged by using a large amount of seawater. If the water flow is recycled, the solution will be diluted and the operation will cease, so it cannot form a cyclic water flow for power generation. It can only be built at the confluence of rivers and seas. Moreover, the semipermeable membranes that retain the salt from seawater have small pores and poor water permeability, resulting in a weak power generation capacity for the system. The river water contains impurities that are very likely to clog the semipermeable membranes, affecting the practical application of river and sea salinity difference osmotic energy power generation technology.

## SUMMARY

In order to extract energy from common environmental thermal energy and serve humanity, the main objective of the disclosure is to provide a nano check valve osmosis and energy collection method and a device.

In order to achieve above purpose, a nano check valve osmosis and energy collection method is provided and includes steps: placing two semipermeable membranes into a U-shaped tube, filling a solution into the U-shaped tube and between the two semipermeable membranes, and filling a solvent into the U-shaped tube and outside the two semipermeable membranes; applying an energy field in the solution to regulate a distribution of solute particles in the solution to make concentrations at interfaces of the two semipermeable membranes different, thereby resulting in different osmotic pressures of the solution at the two semipermeable membranes, further making the solvent outside of the two semipermeable membranes permeate into the solution to make an internal pressure of the solution increase to exceed the osmotic pressure of one with a low concentration of the two semipermeable membranes, and causing the solution to undergo reverse osmosis on the one with the low concentration of the two semipermeable membranes. The solvent achieves unidirectional flow sequentially through osmosis of one with a high osmotic pressure of the two semipermeable membranes, the solution, and the reverse osmosis of one with a low osmotic pressure of the two semipermeable membranes; the solvent with the unidirectional flowing forms liquid level potential energy or liquid flow kinetic energy for energy storage or power generation.

When the energy field is an electrostatic field and the solution includes charged ions, an effect of the electric field causes concentrations of the charged ions to change at the two semipermeable membranes, resulting in different concentrations of the solution at the interfaces of the two semipermeable membranes; or, when the energy field is a magnetic field and the solution is a liquid containing strong diamagnetic nanoparticles, an effect of the magnetic field causes different concentrations of the strong diamagnetic nanoparticles at the interfaces of the two semipermeable membranes; or, when the energy field is a gravity field, the solution is a liquid containing nanoparticles, a combined effect of the gravity and buoyancy causes a concentration of the nanoparticles in the liquid to increase at one of the two semipermeable membranes, resulting in different concentrations of the solution at the interfaces of the two semipermeable membranes.

A nano check valve osmosis and energy collection device is provided and includes a U-shaped container and a check valve disposed in the U-shaped container. The check valve includes: two semipermeable membranes, detachably disposed in the U-shaped container. A solution is filled into the U-shaped container and between the two semipermeable membranes, and a solvent is filled into the U-shaped container and outside the two semipermeable membranes. The device further includes a concentration regulating module configured to regulate a concentration of the solution, thereby making concentrations of the solution near the two-semipermeable membranes different.

In an embodiment, specifically, the concentration regulating module is one of an electrostatic field component. The electrostatic field component is a charged body, the electrostatic field component is placed in the solvent on a side of one of the two semipermeable membranes and insulated from the solvent. The solution includes charged ions, and an electric field effect of the charged body causes concentrations of the charged ions to change at the two semipermeable membranes, thereby resulting in different concentrations of the solution at the interfaces of the two semipermeable membranes.

In an embodiment, one of the two semipermeable membranes is the charged membrane, the other semipermeable membrane is an electrically neutral membrane. The solution includes charged ions, and an electric field effect of the charged membrane causes concentrations of the charged ions to change at the two semipermeable membranes, thereby resulting in different concentrations of the solution at the interfaces of the two semipermeable membranes.

In an embodiment, the two semipermeable membranes are charged membranes, a charged layer of one of the two semipermeable membranes faces towards the solvent, and a charged layer of the other semipermeable membrane faces towards the solution and is insulated from the solution. The solution includes charged ions, and an electric field effect of the charged membranes causes a concentration of the charged ions to change at the other semipermeable membrane, thereby resulting in different concentrations of the solution at the interfaces of the two semipermeable membranes.

In an embodiment, the solution is a liquid with strong diamagnetic nanoparticles suspended inside the liquid. The concentration regulating module is a magnet located on an outer side of one of the two semipermeable membranes, and a magnetic field effect of the magnet drives the strong diamagnetic nanoparticles to approach the other semipermeable membrane.

In an embodiment, the solution is a liquid with nanoparticles suspended inside the liquid, the concentration regulating module is removed from the check valve, and a natural gravity field is utilized. A diameter of the nanoparticles and pore sizes of the two semipermeable membranes are 0.5-10 nanometers (nm), and the diameter of the nanoparticles is larger than the pore sizes of the two semipermeable membranes. The nanoparticles are insoluble in liquid and do not adhere to the two semipermeable membranes, the two semipermeable membranes are horizontally disposed, and the nanoparticles float or sink under a combined action of gravity and buoyancy of the liquid. One of the two semipermeable membranes is at a high concentration of the nanoparticles, and the nanoparticles are resuspended in the liquid for a certain period of time through a vibration.

In an embodiment, the U-shaped container includes a hollow cavity and two connecting tubes. Two sides of the hollow cavity define a first opening and a second opening, respectively, and the two semipermeable membranes are detachably disposed inside the hollow cavity. Low ends of the two connecting tubes are communicated with the first opening and the second opening, respectively, and the two connecting tubes are filled with the solvent therein

In an embodiment, the two semipermeable membranes are disposed inside the hollow cavity, and the hollow cavity is divided into three chambers, one of the three chambers between the two semipermeable membranes is filled with the solution, and rest two of the three chambers on two sides are filled with the solvent. The lower ends of the two connecting tubes are connected to the rest two of the three chambers, respectively.

Compared to the related art, the benefits of the disclosure are as follows.

The method and the device of the disclosure achieve regional regulation of solution concentration by providing a U-shaped container with two semipermeable membranes filled with solutions and solvents of different concentrations, along with the concentration regulating module. This allows for different solution concentrations near the two semipermeable membranes, enabling the regulation of osmotic pressure and thus the realization of an osmotic effect similar to that of the check valve. The solvent outside the two semipermeable membranes permeates into the solution to make an internal pressure of the solution increase to exceed the osmotic pressure of one with a low concentration of the two semipermeable membranes, and causing the solution to undergo reverse osmosis on the one with the low concentration of the two semipermeable membranes. The solvent achieves unidirectional flow sequentially through osmosis of one with a high osmotic pressure of the two semipermeable membranes, the solution, and the reverse osmosis of one with a low osmotic pressure of the two semipermeable membranes. The solvent with the unidirectional flowing forms liquid level potential energy or liquid flow kinetic energy for energy storage or power generation, thereby achieving the osmosis and energy collection. The disclosure selects solutes with larger particle volumes and corresponding semipermeable membranes to increase the liquid flow rate, thereby enhancing the power generation capacity. It also helps to prevent the blocking of the semipermeable membranes, enhancing the practicality and stability of the device. In summary, the nano check valve osmosis and energy collection device can achieve cyclic power generation through environmental energy collection, and it has three "spontaneous" characteristics: it can spontaneously start without human energy input, it can spontaneously continue to operate without human energy input, and it can spontaneously continue to perform work without human energy input. As long as the environmental temperature is above 0 °C and not higher than 100 °C (can keep the solution in a liquid form), the device can always operate and perform work without consuming energy resources, without increasing the temperature of the earth, and the power generated by the device is inexhaustible and endlessly usable.

BRIEF DESCRIPTION OF DRAWINGS

The attached drawings described here are intended to provide a further understanding of the disclosure and form a part of the disclosure. The illustrative embodiments and their explanations of the disclosure are used to explain the disclosure and do not constitute an improper limitation of the disclosure.

FIG. 1 illustrates a principal diagram of a nano check valve of the disclosure.
FIG. 2 illustrates a schematic diagram of different osmotic pressures corresponding to different concentrations at two ends of a solution of the disclosure.
FIG. 3 illustrates a schematic diagram of a circulation system for osmotic and energy collection of the disclosure.
FIG. 4 illustrates a schematic diagram of osmosis and energy collection for power generation of the disclosure.
FIG. 5 illustrates a principal diagram of the nano check valve using a gravity field of the disclosure.
FIG. 6 illustrates a schematic diagram of a principle of osmosis and energy collection using a magnetic field of the disclosure.
FIG. 7. illustrates a schematic diagram of a principle of the osmotic effect.
FIG. 8 illustrates a schematic diagram of a principle of osmosis and energy collection using a charge type electrostatic field of the disclosure.
FIG. 9 illustrates a schematic diagram of a cascading structure of osmosis and energy collection using charge type electrostatic field in the disclosure.

Description of reference signs:

1. U-shaped container; 2. check valve; 2-1. semipermeable membrane; 2-2. solution; 2-3. concentration regulating module; 1-2. connecting tube; 1-3. first opening; 1-4. second opening; 1-5. chamber.

DETAILED DESCRIPTION OF EMBODIMENTS

Further explanation of the disclosure will be provided below in conjunction with the attached drawings and the embodiments.

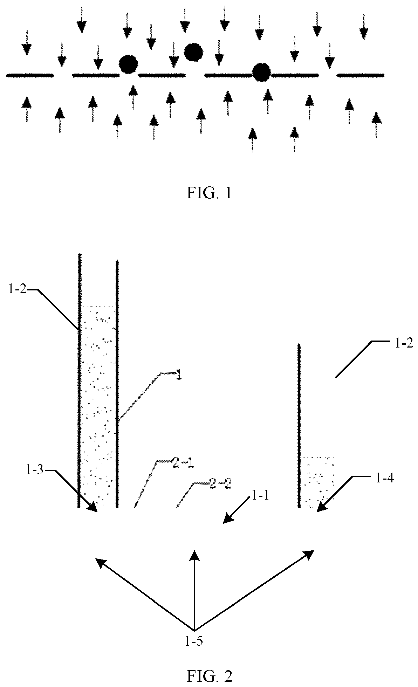

A principle of a nano check valve is illustrated using a macroscopic model. There is a porous tabletop with many through-holes as shown in FIG. 1 that is supposed. First, the case is considered where there are no balls. Now, it is assumed that an equal number of small bullets are fired from above the tabletop downward and from below the tabletop upward at every moment. At any given moment, the probability and the number of bullets passing through the holes from above to below and from below to above are the same, and the number of bullets above and below the tabletop is equal.

Now, it is further assumed that some holes (i.e., some through-holes) of the porous tabletop are covered or suspended with lightweight small balls to obstruct the small holes, as shown in FIG. 1.

It is assumed that at every moment, an equal number of bullets are fired from above the tabletop downward and from below the tabletop upward. Due to some of the holes being partially blocked by the small balls, some of the bullets fired downward from above are prevented from passing through the holes by the balls and cannot reach the underside of the tabletop. When bullets are fired upward from below the tabletop, some of the bullets directly pass through the holes to reach the top side of the tabletop, while some of the bullets, with the aid of their kinetic energy, collide with and dislodge the balls to reach the top side. At this point, the probability of bullets above and below the tabletop to pass through the holes of the tabletop is not the same; bullets below the tabletop have a greater ease in reaching the top side of the tabletop. Overall, this creates a unidirectional flow upwards. It is quite evident that throughout the entire process, the small balls and the holes work together to block the downward movement of the balls above the tabletop, but do not prevent the balls from moving upward, thus serving a macroscopic rectifying function akin to "the check valve".

It is should be noted that the small balls, which are knocked away by the impact of the bullets, roll to the other holes and continue to form a check valve with new holes (i.e., the other holes). Therefore, this type of check valve is not fixed at certain hole positions but is "shifting". Despite this shifting, the number of small balls and holes remains constant, and the number of check valves formed by the small balls and blocked holes, as well as the ratio to the total number of holes, always remains unchanged. The more small balls there are, the higher the rate at which holes are blocked, making the effect of the difference in the probability of the bullets moving up and down more pronounced. The greater the kinetic energy of the bullets, the easier it is for them to push away the blocking balls, resulting in a stronger effect.

Furthermore, if the small balls are not stationary but are always in a state of random motion, similar to the Brownian motion of particles in a solution, they spontaneously change positions without being struck by the small bullets. This random motion causes the small bullets to randomly block the holes, forming a check valve together with the blocked holes. Since the displacement of the balls is spontaneous, to achieve the effect of a check valve, a few points as follows are needed to be considered.

1. The small balls and the holes together to form a check valve. If the small balls are too far from the holes and cannot effectively block them, they will not serve the function of a check valve. The effect of the check valve is only related to the small balls in the vicinity of the holes and is unrelated to the distant balls, making it an interface effect.
2. The diameter of the small balls should not be less than the diameter of the holes. If the small balls are ions, at least one type of ion, either positive or negative, should have a diameter not smaller than that of the holes, otherwise the small balls cannot block the holes effectively and it will be difficult to achieve the check valve function.
3. The mass of the small balls should not be too large. The greater the mass of the balls, the more kinetic energy is lost when they are struck by the small bullets, and the weaker the effect of the check valve will be. If the balls cannot be moved at all, the check valve function will fail. In a liquid, if the particles can undergo Brownian motion, it indicates that the liquid molecules can collide with and move the small balls.
4. The small balls should not be stacked too much on top of each other. If too many small balls are stacked, the lower ones will have no space to move. When struck by the small bullets, it will be as if they are hitting a larger ball, and if the small bullets cannot move the small balls, the check valve function will fail.
5. The small balls should not adhere to the holes. If they do, the small bullets will not be able to move them at all, and the check valve function will fail.
6. It is best for the small balls to be in a suspended state, where the small bullets from below can directly pass through the holes to reach the upper space without losing energy. At this point, the effect of the check valve is the most effective. The check valve that spontaneously changes position is equivalent to the small balls always being suspended, and the check valve effect is the most ideal. This is referred to as a "spontaneously shifting" check valve.

In the above concept, it is assumed that the holes and the small balls are very small, at the nanoscale, and can be defined as a "nano check valve". The nano check valve differs from macroscopic check valves in two main ways. First, the main "components" of the nano check valve is that the small balls and holes are not in a fixed pairing relationship but are randomly matched. Second, it is usually not the case that a single nano check valve operates independently at the microscopic level. Instead, a series of nano check valves work collectively at the macroscopic level. The combination of nano check valves at the microscopic level is random, and the effect of the nano check valves at the macroscopic level is stable.

Molecules are in perpetual motion, possessing energy. For example, at room temperature, the speed of molecules in liquid can reach hundreds of meters per second, as the "small bullets" mentioned above. What differs is that the motion of liquid molecules is three-dimensional, with an equal number of molecules moving in every direction and an equal distribution of energy, resulting in countless high-speed "liquid molecular bullets" moving in all directions. Solvent particles in a solution are always suspended and undergo Brownian motion, similar to the small balls with random motion mentioned earlier, if a membrane with appropriately sized small holes is placed between a liquid and a solution, it meets the conditions to create an effect of the nano check valve. The originally chaotic and random thermal motion of the liquid molecules will inevitably lead some to collide with the membrane and spontaneously pass through the holes into the solution. Conversely, some of the liquid molecules from the solution will also collide with the membrane and spontaneously pass through the holes into the liquid. Due to the blocking effect of the solute particles, a check valve effect is produced. Macroscopically, more liquid molecules will move from the liquid to the solution, resulting in the unidirectional flow.

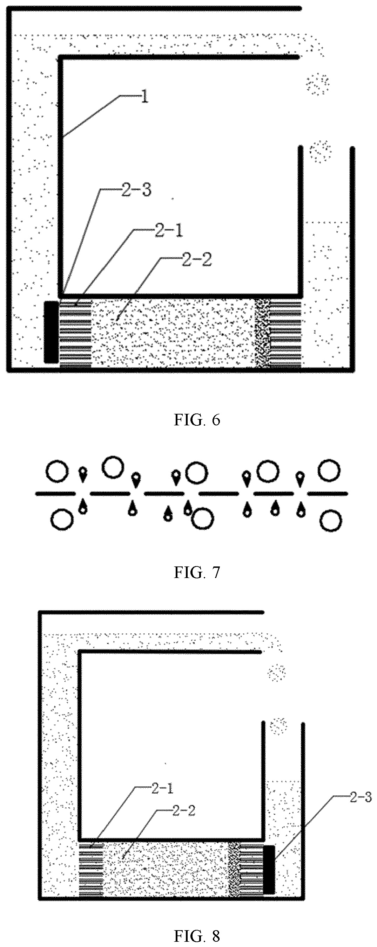

Regarding the osmotic effect as shown in FIG. 7, where a dashed line represents the semipermeable membrane, the larger circular particles represent solute particles that cannot pass through the semipermeable membrane, and the smaller circular arrows represent solvent molecules that can pass through the membrane. On two sides of the semipermeable membrane, the side with a higher solute concentration has fewer solvent molecules because the solute particles occupy a larger area, blocking more pores of the semipermeable membrane. Conversely, the side with a lower solute concentration has more solvent molecules because the solute particles occupy less area and block fewer pores of the semipermeable membrane. The obstruction of the semipermeable membrane pores by solute particles prevents solvent molecules from passing through, so over a unit area and in a unit of time, more solvent molecules will pass through the semipermeable membrane from the side of lower concentration to the side of higher concentration. The overall trend is that solvent molecules exhibit directed movement on a macroscopic scale.

Although there are obvious differences in structural form between the semipermeable membrane and the porous tabletop, as well as between the solute particles and the small balls, and between the solvent molecules and the small bullets, the principle revealed by the above explanation is very much in line with the working principle of the nano check valve. Here, the semipermeable membrane is akin to the porous tabletop, the solute particles are like the small balls suspended in the liquid, and the high-speed thermal motion of the solvent molecules is

analogous to that of the small bullets. The solute particles and the semipermeable membrane together form a check valve, and the solvent molecules rely on their own thermal motion to spontaneously pass through the check valve, moving directionally from a lower concentration to a higher concentration in the solution. Therefore, it can be considered that osmosis is a natural manifestation of the nano check valve effect. This explanation is more fundamental and intuitive.

Based on the principle, equations of the osmotic effect are derived, which are completely the same with the condition equations of the osmotic effect. Furthermore, explanation that the osmotic effect is a nano check valve effect is as follows.

The strength of the osmotic effect is related to concentration. If the concentrations at the interfaces of the semipermeable membrane are regulated, it is possible to expand the osmotic effect and achieve new functions.

To achieve the goal of unidirectional solvent flow through the osmotic effect, the key is to create a concentration difference of the solute at the interfaces of the two semipermeable membranes. Under normal circumstances, due to diffusive motion, the solute concentration in the solution is uniform everywhere and does not spontaneously generate a concentration difference. However, if an external force is applied to the solution, it can result in an uneven distribution of solute concentration, creating the concentration difference.

A nano check valve osmosis and energy collection method, which can make uneven solute concentration in the solution, thereby resulting in concentration differences. The method includes steps as follows.

Two semipermeable membranes are put into a U-shaped tube, a solution is filled into the U-shaped tube and between the two semipermeable membranes, and followed by filling a solvent into the U-shaped tube and outside the two semipermeable membranes.

An energy field is applied to the solution, a distribution of solute particles in the solution is regulated to achieve different concentrations at interfaces of the two semipermeable membranes, thereby resulting in different osmotic pressures of the solution at the two semipermeable membranes, further making the solvent outside the two semipermeable membranes permeate into the solution to make an internal pressure of the solution increase to exceed the osmotic pressure of one of the two semipermeable membranes with a low concentration, and causing the solution to undergo reverse osmosis on the semipermeable membrane with the low concentration. The solvent achieves unidirectional flow sequentially through the osmosis of the semipermeable membrane with a high osmotic pressure, the solution, and the reverse osmosis of the semipermeable membrane with a low osmotic pressure. The solvent with the unidirectional flowing forms liquid level potential energy or liquid flow kinetic energy for energy storage or power generation.

When the energy field is an electrostatic field and the solution includes charged ions, an effect of the electric field causes concentrations of the charged ions to change at the two semipermeable membranes, resulting in the different concentrations of the solution at the interfaces of the two semipermeable membranes; or, when the energy field is a magnetic field and the solution is a liquid containing strong diamagnetic nanoparticles, an effect of the magnetic field causes different concentrations of the strong diamagnetic nanoparticles at the interfaces of the two semipermeable membranes; or, when the energy field is a gravity field, the solution is a liquid containing nanoparticles, a combined effect of the gravity and buoyancy causes a concentration of the nanoparticles in the liquid to increase at one of the two semipermeable membranes, resulting in different concentrations of the solution at the interfaces of the two semipermeable membranes.

A detailed explanation of the entire process is as shown in FIG. 2, 1 represents the U-shaped container, 2-1 represents the semipermeable membrane, and the two semipermeable membranes 2-1 separate the solution and the solvent from the left and right sides. The two semipermeable membranes 2-1 are disposed inside the U-shaped container 1. The solution is filled between the two semipermeable membranes 2-1, and the solvent is filled outside the two semipermeable membranes 2-1. The black and white dots on the right side represent particles forming a higher concentration at the interface of the semipermeable membrane due to certain effects. According to the principle of the osmosis, if the middle is a solution with a high concentration, the solvent on the left and right sides of the two semipermeable membranes will spontaneously osmose towards the solution, causing the pressure in the middle to increase. However, the left side of the semipermeable membrane is the intrinsic solution with a lower concentration and correspondingly lower osmotic pressure, and the solution at the interface of the right side of the semipermeable membrane has a high concentration, corresponding to a higher osmotic pressure. When the solvent from the left and right sides osmose into the middle and the pressure in the middle reaches a level corresponding to the osmotic pressure on the left side, the solvent on the left side will no longer osmose. Meanwhile, the solvent on the right side, which has not yet reached its osmotic pressure, will continue to osmose, causing the pressure in the middle to continue to rise and gradually exceed the osmotic pressure on the left side. This pressure difference will cause the solution to exert reverse osmosis on the left semipermeable membrane, squeezing out the solvent and causing the solvent to flow to the left. As a result, there is a continuous seepage of the solvent from the right side and a continuous exudation of the solvent from the left side, creating a macroscopic one-way flow until eventually the right and left sides reach a pressure equilibrium, and the solvent from the right side no longer seeps in, and the solvent from the left side also stops exuding, bringing the system to an equilibrium state.

It is assumed that the pressure in the middle at this time is $H_C$, the liquid level pressures on the left and right sides are respectively $H_L$ and $H_R$, and the osmotic pressures on the left and right sides are $\pi_L$ and $\pi_R$, respectively.

According to the van's Hoff equation (1) of the osmotic pressure, it can be inferred as follows:

$$H_C = H_L + \pi_L \qquad (2)$$

$$H_C = H_R + \pi_R \qquad (3)$$

the equation (2) minus the equation (3) to obtain the equation (4) as follows:

$$H_L\text{-}H_R\text{=}\pi_R\text{-}\pi_L \qquad (4).$$

where the equation (4) indicates that under the equilibrium state, the liquid level pressure difference on the left and right sides is equal to the "osmotic pressure difference" on the right and left sides, regardless of the initial height of the liquid levels on two sides.

It is assumed that the intrinsic particle concentration of the solution is c, the concentration increase at the interface of the semipermeable membrane by some action on the particles is $c_I$, and the total concentration is $c+c_I$. If the semipermeable membrane is an ideal membrane, it can completely block the particles in the solution from entering the solvent. The particle concentration in the solvent is 0. The equation (1) is substituted into the equation (4) to obtain the equation (5) as follows:

$$H_L - H_R = (c + c_I)RT\text{-}cRT\text{=}c_IRT \qquad (5),$$

where the equation (5) indicates that the pressure difference between liquid levels of the left and right sides is only related to the increased concentration at the interface of the right membrane, and is not related to the intrinsic concentration of the solution.

However, it is difficult to achieve the ideal state of the semipermeable membrane in practice. There are always particles passing through the semipermeable membrane and entering the solvent. The particle concentration in the left solvent is set to be $c_L$ and the particle concentration in the right solvent is set to be $c_R$. According to the equation (1), the osmotic differences on the left and right sides of FIG. 2 are:

$$\pi_R = (c+c_I - c_R)RT \qquad (6)$$

$$\pi_L = (c-c_L)RT \qquad (7)$$

The equation (6) and the equation (7) are substituted into the equation (4) to obtain the equation (8) as follows:

$$H_L - H_R = c_I RT - (c_R - c_L)RT \qquad (8)$$

The equation (8) indicates that the steady-state liquid level pressure difference between the left and right sides is equal to that the corresponding osmotic pressure of the increase $c_I$ of concentration at the right membrane interface minus the corresponding osmotic pressure difference of the particle concentration difference in the solvent on the right and left sides.

When $c_I = 0$, that is, the solution has not been subjected to external effects and the concentrations at two sides are consistent, the equation (8) is simplified as follows:

$$H_L - H_R = (c_L - c_R)RT \qquad (9)$$

The equation (9) indicates that the particle concentration in the solvent on two sides will also affect the liquid level on two sides, and the solvent will flow towards the side with a higher particle concentration.

When $c_I \neq 0$ and the concentration on the right side is greater than the concentration on the left side, the concentration difference between the particles on the two sides generally causes the solvent to osmose to the right, offsetting some of the solvent osmosis caused by $c_I$ to the left. The liquid level on the left side rises slowly and low. When the concentration on the right side $c_R$ is less than the concentration on the left side $c_L$, the concentration difference between the particles on the two sides generally causes the solvent to penetrate to the left, which is the same as the solvent permeation brought by $c_I$ to the left, and the solvent position on the left side rises quickly and high.

The equation (8) can be also simplified as follows:

$$c_I RT = (H_L - H_R) + (c_R - c_L)RT \qquad (10)$$

The equation (10) indicates that the osmotic pressure corresponding to the increase $c_I$ of the particle concentration at the right membrane interface is equal to that the steady-state liquid level pressure difference between the left and right sides plus the osmotic pressure difference corresponding to the particle concentration difference in the solvent on the right and left sides, which reflects the strength of the osmotic pressure difference caused by an increase in external concentration.

In an ideal state, if the left side as shown in FIG. 2 is not yet reached on the equilibrium liquid level, such as when the solvent on the left side is released at half height, the left side cannot be reached on the equilibrium pressure. The intermediate solution will continuously reverse osmosis to push the solvent to the left side, and the solvent on the right side will continue to penetrate into the middle, thereby achieving spontaneous flow of the solvent from right to left.

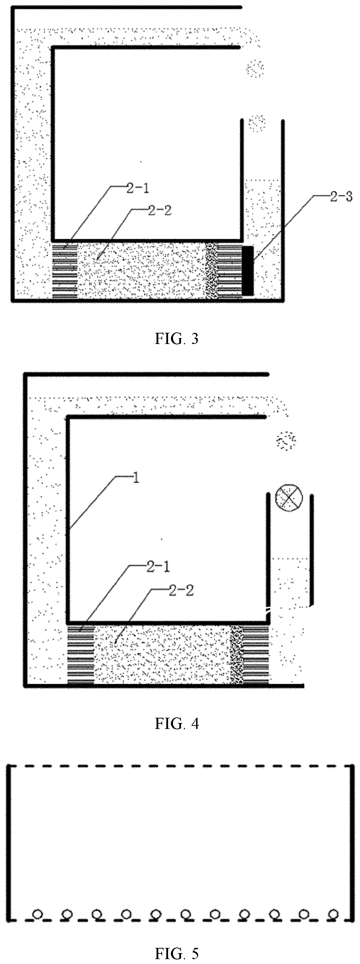

It is further assumed that if the solvent on the left is not allowed to flow away directly, but falls into the right side as shown in FIG. 3, then the solvent on the right side will continuously pass through the solution and spontaneously flow towards the left side. As the liquid level on the left side rises, it will then fall back into the right side, creating a continuous cycle of liquid flow. As long as the semipermeable membrane has a strong enough ability to separate ions, preventing the diffusion of ions from the solution into the solvent, and the concentrations of the solution on two sides of the semipermeable membranes do not reach equilibrium, the thermal motion of the solvent molecules will spontaneously cause osmosis. This cycle of liquid flow will never cease as long as these conditions are met.

As shown in FIG. 4, if a turbine generator is disposed on the right and at the lower end of a position where the solvent falls down, electricity can be generated by utilizing the flow of the liquid, thereby achieving the goal of collection energy from the environment through the osmotic effect to generate electricity. The above process is the random thermal motion of liquid molecules, which is spontaneously transformed into a macroscopic unidirectional liquid flow through an effect of the check valve, and then used to generate electricity through the flow of liquid. After the liquid molecules strike the turbine blades of the turbine generator, the velocity of the turbine blades decreases, and their average translational kinetic energy drops, resulting in the liquid flowing back to the right being cooler than the original liquid on the right. The system needs to absorb heat from the surroundings to maintain the cycle and continue to output energy, ensuring that the entire process is energy conserving. If the generated electrical energy is consumed and then converted back into thermal energy that returns to the environment, the temperature will diffuse, naturally replenishing the thermal energy at the site of the electricity generating. Therefore, this type of power generation essentially includes absorbing the energy of molecular thermal motion from the environment and converting it into electrical energy, which, after being consumed, turns back into thermal energy and returns to the environment to continue supporting the operation of the system.

The nano check valve osmosis and energy collection method directly utilizes environmental thermal energy to perform work. After the performing work, the transformed thermal energy is released into the environment and can be reused by the system, making it different from traditional heat engines with three "spontaneous" characteristics. Firstly, it can spontaneously start without human energy input. Secondly, it can spontaneously continue to operate without human energy input. Thirdly, it can spontaneously continue to perform work without human energy input. As long as the environmental temperature is above 0 °C and not higher than 100 °C (can keep the solution in a liquid form), the system can always operate and perform work without consuming energy resources, without increasing the temperature of the earth, and is inexhaustible and endlessly usable.

**Embodiment 1**

A nano check valve osmosis and energy collection device is provided, and according to nano check valve osmosis and energy collection method, the device includes a U-shaped container 1 and the check valve 2 (i.e., nano check value) disposed in the U-shaped container 1. The check valve 2 includes two semipermeable membranes 2-1 detachably disposed in the U-shaped container 1. A solution 2-2 is filled into the U-shaped container 1 and between the two semipermeable membranes 2-1, and a solvent is filled into the U-shaped container 1 and outside the two semipermeable membranes 2-1. The device further includes a concentration regulating module 2-3 configured to regulate a concentration of the solution 2-2, thereby to make the concentrations of solution 2-2 near the two semipermeable membranes 2-1 different. The entire device can be placed vertically, horizontally, or in other placement methods according to actual operational needs.

The concentration regulating module 2-3 is an electrostatic field component or a charged semipermeable membrane. The electrostatic field component can be a power source type electrostatic field component with an external power source, or a charge type electrostatic field component with static electricity carried by the object itself.

As shown in FIG. 8, an object that always carries static electricity is disposed on the right side of the right semipermeable membrane 2-2, and it is required that the static electricity carried by the object will not disappear due to immersion in liquid. It is assumed that the object is negatively charged, it attracts cations (i.e., positive electric charges) from the solution 2-2 towards it. Since the cations cannot pass through the semipermeable membranes, the attracted cations will accumulate on the left side of the right semipermeable membrane 2-2. After the number of cations increases, the accumulate cations will further attract some anions (i.e., negative electric charges) to come over until a new electrical equilibrium is reached at the interface of the right semipermeable membrane 2-2, forming a "double electric layer". The thickness of the double electric layer is typically in a range of 0.2 nanometers to 20 nanometers. After the new electrostatic equilibrium is established, the rest of the solution 2-2 remains electrically neutral, with the concentration essentially unchanged and uniform everywhere. Therefore, the concentration of the solution 2-2 at the interface of the left semipermeable membrane 2-1 is still essentially the original solution concentration. However, due to the establishment of the double electric layer, the ion density in the interface of the right semipermeable membrane 2-1 is significantly higher than that of the equilibrium region, which effectively creates a high concentration at the interface of the right semipermeable membrane 2-1. By placing a charged object, the ion concentration at the interface of the right semipermeable membrane 2-1 will be greater than the ion concentration at the interface of the left semipermeable membrane 2-1, creating a difference in ion concentration at the two interfaces of the two semipermeable membranes 2-1. According to the above osmosis and energy collection principle, the difference in ion concentration at the two interfaces of the two semipermeable membranes 2-1 will lead to different osmotic pressures on the two sides, resulting in a liquid level difference corresponding to the osmotic pressure difference. It should be noted that FIG. 8 shows the charged object placed on the right side of the right semipermeable membrane 2-1. In fact, it can also be placed on the left side of the right semipermeable membrane 2-1, but it is required that the charged object must be in close contact with the right semipermeable membrane 2-1, with the distance not exceeding 20 nanometers, otherwise, the double electric layer will form directly on the surface of the charged object, not at the interface of the right semipermeable membrane 2-1. By adopting process measures to composite charged coatings onto a surface of semipermeable membranes to merge them into one, this issue can be circumvented, achieving a very good effect.

The characteristics of the electrostatic field are simple and easy to obtain, easy to implement, strong electric field and good effect, making it promising for early practical application. However, the using of the electrostatic field also includes certain shortcomings. The disadvantage of the charge-based electrostatic field is that the static electricity on an object may not be retained for a long time in a liquid, which could result in insufficient durability of the corresponding products. The drawback of the power supply-based electrostatic field is the difficulty in completely eliminating leakage current, which would lead to additional energy consumption. Additionally, the need for an external power source can limit its use.

More than a hundred effective experiments have been conducted on the charge-based electrostatic field for osmosis and energy collection without an external power source, all of which have shown the expected effects.

The specific experiments are conducted using commercially available semipermeable membranes from the market, which are categorized into two types: one type is the reverse osmosis (RO) membrane with non-electric; the other type is the nanofiltration (NF) membrane with an electric charge. The pore size of the RO membrane typically ranges from 0.1 nanometers to 1 nanometer. The pore size of the NF membrane typically ranges from 1 nanometer to 2 nanometers. The RO membrane has smaller pores and a stronger ability to retain the solutes. The NF membrane has larger pores and relatively weaker solute retention capacity compared to the RO membrane. The experiment utilizes the characteristics that the NF membrane is charged, while the RO membrane is not charged, relying on the static electricity of the NF membrane to create a high concentration at the interface of the semipermeable membrane, which generates an osmotic pressure difference. Here, the valve body composed of the two semipermeable membranes with the solution is referred to as a "check valve set".

The specific experiment utilized membranes from FilmTec, USA. The RO membrane is FFM-FR, with a molecular weight cut-off of 100, and it is non-electric. The NF membrane is FFM-NL, with a molecular weight cut-off ranging from 300 to 500, and it carries a negative charge.

Subsequently, experiments on water level difference of osmosis and energy collection using the electrostatic field are conducted using both the RO membrane and the NF membrane. A range of solute concentrations are tested, including sodium sulfate, sodium citrate, magnesium sulfate, and ferric chloride. Additionally, experiments on water flow circulation of osmosis and energy collection and cascading of osmosis and energy collection are also carried out.

Part of the experiments selected in the disclosure will be described.

The water level difference of osmosis and energy collection using the charge-based electrostatic field is as follows.

As shown in FIG. 2, the main body of the selected experimental device is a multi-stage microbial reactor, with three chambers connected by screws to form a hollow cavity acting as a sealed container. The hollow cavity is divided into three chambers by two semipermeable membranes, with the RO membrane on the left and the NF membrane on the right. During the experiment, the middle chamber is injected with a solution, sealed at the top, and pure water is injected into the left and right chambers as the solvent. To form a U-shaped container in conjunction with the sealed container, the upper ends of the left and right sides are respectively connected to transparent rubber hoses. In this experiment, the transparent rubber hoses with an inner diameter of 5mm are selected, with openings on the upper ends, allowing the pure water to flow inside the transparent rubber hoses. The initial water levels of the pure water in the two transparent rubber hoses are at the same height, on the same horizontal plane. After pure water is injected into left and right chambers and the solution into the middle chamber, osmosis occurs, causing the pure water from the two sides to seep into the middle chamber, resulting in a slight drop in the water levels of the two transparent rubber hoses. As previously mentioned, the left RO membrane is non-electric, with a lower solution concentration at the interface and correspondingly lower osmotic pressure. After the pure water enters, the pressure in the middle chamber increases, and the left chamber reaches the osmotic pressure first. The right NF membrane is electric, with a higher ion concentration at the interface and correspondingly higher osmotic pressure. Therefore, the pure water on the right chamber will continue to seep into the middle chamber, causing reverse osmosis against the left membrane to squeeze water out of the solution, causing the water level in the transparent rubber hose on the right to continue to drop and the water level in the transparent rubber hose on the left begins to rise.

In the experiment, the semipermeable membranes used are not ideal semipermeable membranes, and ions from the solution can diffuse through the membranes into the water, forming an osmotic pressure. Typically, the RO membrane has smaller pores and a stronger ability to retain ions, resulting in fewer ions diffusing to the left and slower concentration changes. The NF membrane has larger pores and a weaker ability to retain ions, leading to more ions diffusing to the right and faster concentration changes. As diffusion progresses, the ion concentrations in the pure water on the left and right sides become different, creating an osmotic pressure difference that favors the rise of the water level on the right and the drop of the water level on the left. As can be seen from equation (8), its effect is exactly opposite to that of the electrostatic field effect. As the difference in ion concentrations caused by diffusion continues to expand, the corresponding osmotic pressure difference increases. With the two effects, the water level on the left rises and the water level on the right drops, but this process will slow down over time. When the osmotic pressure difference caused by the ion concentration difference due to diffusion, and the water level pressure difference, equals the osmotic pressure caused by the electrostatic field effect, the water flow enters an equilibrium state and no longer changes. As can be seen from equation (10), at this point, the water level pressure difference caused by the electrostatic field effect is equal to the sum of the existing water level pressure difference on the left and right and the osmotic pressure difference corresponding to the ion concentration difference in the water on the left and right sides. Thereafter, as the ion concentration in the pure water on the right continues to increase, the water level will change in the reverse direction, with the water level on the left beginning to drop and the water level on the right gradually rising. In the experiment, a total dissolved solids (TDS) detection pen model Xiaomi XMTDS01YM is used to measure the ion concentrations in the pure water on both left and right sides at the water level equilibrium and to convert them into molar concentrations, and the corresponding osmotic pressure difference is calculated according to the formula: $\pi = cRT$.

The experimental results are shown in Table 1.

Table 1 Experimental results of water level difference of osmosis and energy collection using the electrostatic field

| number | Solution and concentration | Equilibrium water level left higher than right (mm) | Time to equilibrium water level (h) | Equilibrium water level right higher than left (mol/l) | ion concentration difference at equilibrium corresponds to the water level difference (mm) | Estimating water level difference caused by electrostatic effect (mm) |
|---|---|---|---|---|---|---|
| 1 | 1.3% $C_6H_5Na_3O_7$ | 157 | 6 | 0.0090 | 2170 | 2330 |
| 2 | 1% $C_6H_5Na_3O_7$ | 301 | 24 | 0.0174 | 4190 | 4490 |
| 3 | 1% $C_6H_5Na_3O_7$ | 163 | 20 | 0.0131 | 3170 | 3330 |
| 4 | 1% $C_6H_5Na_3O_7$ | 234 | 25 | 0.0081 | 1950 | 2180 |
| 5 | 0.8% $Na_2SO_4$ | 108 | 6 | 0.0077 | 1840 | 1950 |
| 6 | 0.8% $Na_2SO_4$ | 111 | 9 | 0.0127 | 3050 | 3160 |
| 7 | 0.5% $Na_2SO_4$ | 286 | 14 | 0.0047 | 1130 | 1420 |
| 8 | 0.5% $Na_2SO_4$ | 379 | 14 | 0.0030 | 729 | 1110 |
| 9 | 0.5% $Na_2SO_4$ | 425 | 14 | 0.0026 | 611 | 1040 |
| 10 | 0.5% $Na_2SO_4$ | 212 | 21 | 0.0093 | 2230 | 2440 |

Conclusion

A: Experimental results have shown that the charge-based electrostatic field spontaneously causes water level differences through the osmosis and energy collection.
B: The average water level difference caused by static electricity in the check valve set is about 2350 mm.
C: The water level rises slowly and it takes a long time to reach equilibrium water level.

To verify the effectiveness of the using of the charge-based electrostatic field for osmosis and energy collection, it is important to minimize the coupled influence brought about by the osmotic pressure difference formed by ion diffusion concentration differences. The original planis to select two semipermeable membranes with the same pore size, one charged and the other non-electric, to "match" for the experiment. However, such well-matched semipermeable membranes are not available on the market. Cautiously, a non-electric RO membrane with a smaller pore size is chosen to be matched with a charged NF membrane with a larger pore size for the experiment. These membranes are all ordinary commercial products purchased from the market, with less consistency in their micro-characteristics, resulting in more scattered experimental results. The expected effect is observed, which is sufficient for the verification of the principle of osmosis and energy collection. However, the specific experimental values may not accurately reflect the effectiveness of effect of the electrostatic field for osmosis and energy collection and are only of reference significance. Additionally, during the experiment, there are also many cases where the ion concentration in the pure water on the left is higher than that on the right. In this situation, the concentration effect and the electrostatic field effect act in the same direction, both causing water to flow to the left. There are instances in the experiment where the water level in the left transparent rubber hose rose to over 3000 mm and continued to rise.

All these experiments are conducted under the condition of equal and initial water levels, and it took a long time to reach osmotic equilibrium pressure. During this period, solutes diffused through the semipermeable membranes, and the ion concentrations in the pure water on the two sides increased nonlinearly, severely affecting the water level difference. Based on the preliminary verification of the electrostatic field effect of the NF membrane in the experiments, which is around 2350 mm, the method is changed for the experiment. A direct approach is taken to apply an initial water level difference between the left and right sides to observe the water level changes over a short period, during which the ion concentrations on the two sides remained essentially unchanged. Experiments are conducted using a 0.5% of $Na_2SO_4$ solution with different initial water level differences, limited to a half-hour observation period to monitor the water level changes. The relevant experimental results are shown in Table 2.

Table 2 Experimental results of water level difference in charge-based electrostatic field for osmosis and energy collection

| Number | Initial water level left higher than right (mm) | Change amount after half an hour (mm) | Water level left higher than right after half an hour (mm) | Ion concentration difference of water level left higher than right (mol/l) | Note |
|---|---|---|---|---|---|
| 1 | 1540 | +41 | 1581 | -0.0001 | First group |
| 2 | 1758 | +15 | 1773 | 0.0000 | |
| 3 | 1910 | +14 | 1924 | 0.0000 | |
| 4 | 2060 | +11 | 2071 | 0.0000 | |
| 5 | 2200 | +47 | 2247 | -0.0002 | Second group |
| 6 | 2310 | +28 | 2338 | -0.0001 | |
| 7 | 2397 | +2 | 2399 | -0.0001 | |
| 8 | 2500 | +1 | 2501 | -0.0001 | |
| 9 | 2650 | +50 | 2700 | 0.0000 | Third group |
| 10 | 2765 | +42 | 2807 | 0.0000 | |
| 11 | 2830 | +12 | 2842 | 0.0000 | |
| 12 | 2850 | -2 | 2848 | 0.0000 | |
| Conclusion: The average water level difference caused by static electricity in the check valve set is about 2800 mm. | | | | | |

To further examine whether water level difference of the osmosis and energy collection can form a circulating flow, experiment of water flow circulation of the charge-based electrostatic field for osmosis and energy collection is also conducted. The experimental setup is essentially the same as the above experiments, with the difference being that the left hose is connected to the right hose, with a dropper added in between to create a circulating flow, as shown in FIG. 3. The dropper needle is a 1.25 mm medical injection needle, and the dripping height is approximately 110-120 mm. The interval time between water droplets falling is measured, and the total number of days the circulation lasted and the liquid concentrations in each chamber at the end of the circulation.

Results: a group cycle lasted for 11 days, a group cycle lasted for 13 days, another cycle group lasted for 16 days, and the longest group cycle lasted for 21 days. At the beginning, the water droplets fall faster and slower until they stop dripping. At the end of the cycle, the liquid concentration in each chamber is basically equal.

Conclusion:

A: The water flow of the system can circulate spontaneously.
B: The circulating water droplets are very small and slow.
C: After circulation, the solution concentration gradually reaches equilibrium.

The duration of the circulation is determined by the time it takes for the solution concentration to reach equilibrium. The stronger the semipermeable membrane's ability to retain ions, the longer the time it takes for the solution concentration to reach equilibrium. Future research and development should aim to select solute particles with larger volumes, ensuring that the pore size of the semipermeable membrane is significantly larger than the diameter of the particles, to enhance circulation capability of the system by ensuring the retention capacity of membrane. Specifically for this experiment, the duration of the cycle is also related to the volume of water, the longer the hose and the greater the water storage, the longer it takes for the solution concentration to reach equilibrium. Therefore, experiments with different membranes and different lengths of hoses yield significantly different results. The first few groups have a circulation hose length of about 0.7 meters, and the last group have a circulation hose length of about 5 meters. The water drops are small and fall slowly, mainly determined by the water permeability characteristics of the semipermeable membranes, as one side in the experiment used the RO membrane, which has poor water permeability. If a non-electric NF membrane are used instead, the water flow would be greater. Additionally, the size of the macroscopic water flow is directly proportional to the area of the membrane used; the larger the membrane, the greater the water flow. The size of the water flow affects the power generation capacity.

In this experiment, the diameter of the membrane is 28 mm. If the diameter is increased by a factor of 100 to 2.8 m, theoretically, the water flow would increase by a factor of 10000. Even so, from a practical standpoint, this is still considered insufficient. Therefore, subsequent research should focus on enhancing the retention capacity and water permeability of the semipermeable membrane, which is key to the practical application of osmosis and energy collection.

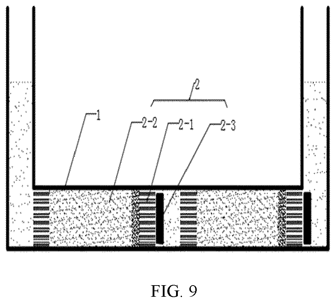

To verify whether the cascading use of the check valves can enhance the water level difference, the experiment of the cascading of osmosis and energy collection using a charge-based electrostatic field is conducted. The experimental setup is essentially the same as the previous experiments, except that the left and right water hoses of two setups are connected end-to-end to observe whether the water level differences would add up, as shown in FIG. 9, which is a schematic diagram of a cascading structure of penetrating to gather energy using charge type electrostatic field. An initial water level difference is set with the left side being 4550mm higher than the right side, and the water level changes are observed after half an hour.

Result: half an hour later, the water level difference reached 4558 mm.

Conclusion:

A: The water level difference superimposes after the cascading of nano check valves.
B: The superimposed value of the water level difference is less than the theoretical direct sum of approximately 5600mm.

Note: Due to the limitations of indoor space, the maximum achievable height is only around 4560 mm. The experimental results have preliminarily verified that the water level difference can be superimposed. In this experiment, two check valves are connected in a horizontal series as shown in FIG. 9. Actual products can also choose a vertical series according to requirements.

Given the limited conditions, the experiments are conducted with makeshift setups. If superior experimental materials and conditions are chosen, it is believed that the experimental results would be more accurate. If semipermeable membranes are designed and customized accordingly, a higher water level difference could be achieved with a single unit valve.

**Embodiment 2**

A nano check valve osmosis and energy collection device is provided, according to nano check valve osmosis and energy collection method, the device includes a U-shaped container 1 and the nano check valve 2 disposed in the U-shaped container 1. The nano check valve 2 includes two semipermeable membranes 2-1 detachably disposed in the U-shaped container 1. A solution 2-2 is filled into the U-shaped container 1 and between the two semipermeable membranes 2-1, and a solvent is filled into the U-shaped container 1 and outside the two semipermeable membranes 2-1. The device further includes a concentration regulating module 2-3 configured to regulate a concentration of the solution 2-2, thereby to make the concentrations of the solution 2-2 near the two semipermeable membranes 2-1 different.

In the embodiment, a magnetic field method is utilized, and the solution 2-2 is a liquid with strong diamagnetic nanoparticles suspended inside the liquid. A strong magnet is placed at an end of the U-shape container 1. As shown in FIG. 6, the black object on the left represents the strong magnet. The magnetic field causes the diamagnetic solute in the solution 2-2 to move away from the strong magnet and accumulate near another end of the semipermeable membrane 2-1. This increases the concentration of the solution 2-2, resulting in different solute concentrations at the interfaces of the two semipermeable membranes 2-1, creating an osmotic pressure difference and enabling achieving osmosis and energy collection. The entire device can be vertically placed, horizontally placed, or positioned in other ways according to the actual operational requirements.

The advantage of the magnetic field method is that it does not consume external energy, has stable performance, and is not limited by the solute, which facilitates the selection of semipermeable membranes with larger pores to enhance water permeability. It has the potential to produce a high interface concentration, achieve a significant osmotic pressure difference, and generate a larger water flow, leading to an effective outcome. If successful, it has good practicality. However, the drawbacks include the difficulty in finding strongly diamagnetic materials and the high cost of preparing nanomaterials.

**Embodiment 3**

A nano check valve osmosis and energy collection device is provided, according to nano check valve osmosis and energy collection method, the device includes a U-shaped container 1 and the nano check valve 2 disposed in the U-shaped container 1. The nano check valve 2 includes two semipermeable membranes 2-1 detachably disposed in the U-shaped container 1. A solution 2-2 is filled into the U-shaped container 1 and between the two semipermeable membranes 2-1, the solution 2-2 is a liquid with nanoparticles suspended inside the liquid, and a solvent is filled into the U-shaped container 1 and outside the two semipermeable membranes 2-1. In the embodiment, there is no need to provide a concentration regulating module 2-3, and a natural gravity field can be directly utilized.

As shown in FIG. 5, the black vertical lines in FIG. 5 represent the casing of the nano check valve component, the dashed lines represent the semipermeable membranes 2-1, and the balls represent nanoparticles. The semipermeable membranes 2-1 are horizontally disposed. The diameter of the nanoparticles and the pore size of the semipermeable membranes 2-1 are in a range of 0.5-10 nanometers. It is required that the nanoparticles should be slightly larger than the pore size of the semipermeable membranes 2-1. The nanoparticles should remain undissolved in the liquid and should not adhere to the semipermeable membranes 2-1. After the liquid is injected, the nanoparticles can remain suspended in the liquid for some time and will eventually settle at the bottom of the liquid due to gravity of the nanoparticles being greater than buoyancy of the liquid. The settled nanoparticles will have a higher concentration above the lower semipermeable membrane and can be resuspended in the liquid when subjected to vibration. Alternatively, the nanoparticles may float at the top of the liquid due to gravity being less than buoyancy, with the floating nanoparticles having a higher concentration below the upper semipermeable membrane. In any case, the particle concentrations near the upper and lower semipermeable membranes 2-1 will be different, resulting in different osmotic pressures. The method of using the natural gravity field does not require a conventional solution. It only requires a liquid and a number of nanoparticles in the liquid, with the nanoparticles replacing the solute. In particular, when used in combination, simply adding one more semipermeable membrane 2-1 and the corresponding nanoparticles can increase a number of the check valve sets, which can reduce the amount of semipermeable membranes 2-1 used.

If a solute exhibits a distinct gravitational concentration gradient in a solution, it is also expected to form the nano check valve using a natural gravity field.

The advantages of the natural gravity field are its straightforward and clear principle, no consumption of external energy, and no limitation by the solute, which facilitates the selection of semipermeable membranes with larger pores to enhance water permeability. When used in combination, the number of semipermeable membranes 2-1 required can be halved. However, with the natural gravity field, nanoparticles are not completely suspended in the liquid, and energy is consumed when liquid molecules collide with them, which can affect the osmotic effect. When applied in products, a high level of horizontal accuracy is required; otherwise, the internal nanoparticles may stack due to tilting, which can affect the effectiveness of the check valve function.

It should be noted that in the disclosure, relational terms such as first and second are only used to distinguish one entity or operation from another entity or operation, and do not necessarily require or imply any such actual relationship or order between these entities or operations. Moreover, the terms "include", "contain", or any other variation thereof are intended to encompass non-exclusive inclusion, such that a process, method, item, or device that includes a series of elements not only includes those elements, but also includes other elements that are not explicitly listed, or are inherent to such a process, method, item, or device.

The above embodiments are only examples of the disclosure and do not constitute a limitation on the scope of protection of the disclosure. Any design that is the same or similar to the disclosure falls within the scope of protection of the disclosure.

**Claims**

1. A nano check valve osmosis and energy collection method, comprising:

placing two semipermeable membranes into a U-shaped tube, filling a solution into the U-shaped tube and between the two semipermeable membranes, and filling a solvent into the U-shaped tube and outside the two semipermeable membranes; and

applying an energy field to the solution to regulate a distribution of solute particles in the solution to make concentrations of the solution at interfaces of the two semipermeable membranes different, thereby resulting in different osmotic pressures of the solution at the two semipermeable membranes, further making the solvent outside the two semipermeable membranes permeate into the solution to make an internal pressure of the solution increase to exceed the osmotic pressure of one with a low concentration of the two semipermeable membranes, and causing the solution to undergo reverse osmosis on the one with the low concentration of the two semipermeable membranes; wherein the solvent achieves unidirectional flow sequentially through osmosis of one with a high osmotic pressure of the two semipermeable membranes, the solution, and the reverse osmosis of one with a low osmotic pressure of the two semipermeable membranes; the solvent with the unidirectional flowing forms liquid level potential energy or liquid flow kinetic energy for energy storage or power generation;

wherein when the energy field is an electrostatic field and the solution comprises charged ions, an effect of the electric field causes concentrations of the charged ions to change at the two semipermeable membranes, resulting in different concentrations of the solution at the interfaces of the two semipermeable membranes; or, when the energy field is a magnetic field and the solution is a liquid containing diamagnetic nanoparticles, an effect of the magnetic field causes different concentrations of the diamagnetic nanoparticles at the interfaces of the two semipermeable membranes; or, when the energy field is a gravity field, the solution is a liquid containing nanoparticles, a combined effect of gravity and buoyancy causes a concentration of the nanoparticles in the liquid to increase at one of the two semipermeable membranes, resulting in different concentrations of the solution at the interfaces of the two semipermeable membranes.

2. A nano check valve osmosis and energy collection device comprising:

a U-shaped container (1) and a check valve (2) disposed in the U-shaped container (1);
wherein the check valve (2) comprises:

two semipermeable membranes (2-1), detachably disposed in the U-shaped container (1), wherein a solution (2-2) is filled into the U-shaped container (1) and between the two semipermeable membranes (2-1), and a solvent is filled into the U-shaped container (1) and outside the two semipermeable membranes (2-1); and
a concentration regulating module (2-3), configured to regulate a concentration of the solution (2-2).

3. The nano check valve osmosis and energy collection device as claimed in claim 2, wherein the concentration regulating module (2-3) is one of an electrostatic field component and a charged semipermeable membrane; the electrostatic field component is a charged body, the electrostatic field component is placed in the solvent on a side of one of the two semipermeable membranes (2-1) and insulated from the solvent; the solution (2-2) comprises charged ions, and an electric field effect of the charged body causes concentrations of the charged ions to change at the two semipermeable membranes (2-1), thereby resulting in different concentrations of the solution (2-2) at interfaces of the two semipermeable membranes (2-1).

4. The nano check valve osmosis and energy collection device as claimed in claim 2, wherein the solution (2-2) is a liquid with diamagnetic nanoparticles suspended inside the liquid;
the concentration regulating module (2-3) is a magnet located on an outer side of one of the two semipermeable membranes (2-1), and a magnetic field effect of the magnet drives the diamagnetic nanoparticles to approach the other semipermeable membrane (2-1).

5. The nano check valve osmosis and energy collection device as claimed in claim 2, wherein the solution (2-2) is a liquid with nanoparticles suspended inside the liquid, the concentration regulating module (2-3) is removed from the check valve (2), and a gravity field is utilized;
a diameter of the nanoparticles and a pore size of the two semipermeable membranes (2-1) are in a range of 0.5 nm to 10 nm, and the diameter of the nanoparticles is larger than the pore size of the two semipermeable membranes (2-1); the nanoparticles are insoluble in the liquid and do not adhere to the two semipermeable membranes (2-1), the two semipermeable membranes (2-1) are horizontally disposed, and the nanoparticles float or sink under a combined action of gravity and buoyancy of the liquid; and one of the two semipermeable membranes (2-1) is at a high concentration of the nanoparticles, and the nanoparticles are resuspended in the liquid for a certain period of time through a vibration.

6. The nano check valve osmosis and energy collection device as claimed in claim 2, wherein the U-shaped container (1) comprises:

a hollow cavity (1-1); wherein two sides of the hollow cavity define a first opening (1-3) and a second opening (1-4), respectively, and the two semipermeable membranes (2-1) are detachably disposed inside the hollow cavity (1-1); and

two connecting tubes (1-2); wherein low ends of the two connecting tubes (1-2) are communicated with the first opening (1-3) and the second opening (1-4), respectively, and the two connecting tubes (1-2) are filled with the solvent therein.

7. The nano check valve osmosis and energy collection device as claimed in claim 6, wherein the two semipermeable membranes (2-1) are disposed inside the hollow cavity (1-1), and the hollow cavity (1-1) is divided into three chambers (1-5), one of the three chambers between the two semipermeable membranes (2-1) is filled with the solution (2-2), and rest two of the three chambers on two sides are filled with the solvent; and the lower ends of the two connecting tubes (1-2) are connected to the rest two of the three chambers, respectively.

8. A nano check valve osmosis and energy collection device comprising:

a U-shaped container (1) and a check valve (2) disposed in the U-shaped container (1);
wherein the check valve (2) comprises:
two semipermeable membranes (2-1), detachably disposed in the U-shaped container (1), wherein a solution (2-2) is filled into the U-shaped container (1) and between the two semipermeable membranes (2-1), and a solvent is filled into the U-shaped container (1) and outside the two semipermeable membranes (2-1); and
wherein at least one of the two semipermeable membranes (2-1) is a charged membrane configured to make concentrations of the solution at the two semipermeable membranes (2-1) different.

9. The nano check valve osmosis and energy collection device as claimed in claim 8, wherein one of the two semipermeable membranes (2-1) is the charged membrane, the other semipermeable membrane (2-1) is an electrically neutral membrane; the solution (2-2) comprises charged ions, and an electric field effect of the charged membrane causes concentrations of the charged ions to change at the two semipermeable membranes (2-1), thereby resulting in different concentrations of the solution (2-2) at interfaces of the two semipermeable membranes (2-1).

10. The nano check valve osmosis and energy collection device as claimed in claim 8, wherein the two semipermeable membranes (2-1) are charged membranes, a charged layer of one of the two semipermeable membranes faces towards the solvent, and a charged layer of the other semipermeable membrane faces towards the solution (2-2) and is insulated from the solution (2-2); and
the solution (2-2) comprises charged ions, and an electric field effect of the charged membranes causes a concentration of the charged ions to change at the other semipermeable membrane (2-1) facing towards the solution (2-2), thereby resulting in different concentrations of the solution (2-2) at interfaces of the two semipermeable membranes (2-1).

11. The nano check valve osmosis and energy collection device as claimed in claim 8, wherein the U-shaped container (1) comprises:

a hollow cavity (1-1); wherein two sides of the hollow cavity define a first opening (1-3) and a second opening (1-4), respectively, and the two semipermeable membranes (2-1) are detachably disposed inside the hollow cavity (1-1); and

two connecting tubes (1-2); wherein low ends of the two connecting tubes (1-2) are communicated with the first opening (1-3) and the second opening (1-4), respectively, and the two connecting tubes (1-2) are filled with the solvent therein.

12. The nano check valve osmosis and energy collection device as claimed in claim 11, wherein the two semipermeable membranes (2-1) are disposed inside the hollow cavity (1-1), and the hollow cavity (1-1) is divided into three chambers, one of the three chambers between the two semipermeable membranes (2-1) is filled with the solution (2-2), and rest two of the three chambers on two sides are filled with the solvent; and the lower ends of the two connecting tubes (1-2) are connected to the rest two of the three chambers, respectively.

EP 4 647 599 A1

FIG. 1

FIG. 2

17

FIG. 3

FIG. 4

FIG. 5

FIG. 6

FIG. 7

FIG. 8

FIG. 9

## EUROPEAN SEARCH REPORT

**Application Number**

EP 24 18 3539

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/267894 A1 (MAISONNEUVE JONATHAN [US]) 27 August 2020 (2020-08-27) * paragraph [0025]; figures 3,4 * ----- | 1-12 | INV. F03G7/00 |
| A | US 2019/226463 A1 (FENG JIANDONG [CN] ET AL) 25 July 2019 (2019-07-25) * paragraph [0055]; figure 12c * ----- | 1,2,8 | |
| A | DE 10 2014 225190 A1 (SIEMENS AG [DE]) 9 June 2016 (2016-06-09) * claim 1; figure 1 * ----- | 1,2,8 | |

**TECHNICAL FIELDS SEARCHED (IPC)**

F03G
B01D
C02F

The present search report has been drawn up for all claims

| Place of search | Date of completion of the search | Examiner |
|---|---|---|
| Munich | 22 November 2024 | de Martino, Marcello |

EPO FORM 1503 03.82 (P04C01)

## ANNEX TO THE EUROPEAN SEARCH REPORT
## ON EUROPEAN PATENT APPLICATION NO.

EP 24 18 3539

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | Publication date | Patent family member(s) | | Publication date |
|---|---|---|---|---|
| US 2020267894 A1 | 27-08-2020 | CA | 3075499 A1 | 14-03-2019 |
| | | US | 2020267894 A1 | 27-08-2020 |
| | | WO | 2019051350 A1 | 14-03-2019 |
| US 2019226463 A1 | 25-07-2019 | EP | 3263896 A1 | 03-01-2018 |
| | | EP | 3475567 A1 | 01-05-2019 |
| | | US | 2019226463 A1 | 25-07-2019 |
| | | WO | 2018002099 A1 | 04-01-2018 |
| DE 102014225190 A1 | 09-06-2016 | NONE | | |

EPO FORM P0459

For more details about this annex : see Official Journal of the European Patent Office, No. 12/82